# EUROPEAN PATENT APPLICATION

(11) **EP 3 382 636 A1**
(43) Date of publication of application: **03.10.2018**
(21) Application number: 17382152.1
(22) Date of filing: 28.03.2017
(51) Int. Cl.: G06Q 50/14, G06Q 50/30, G06Q 10/04, G06Q 10/06

(54) **COMPUTER-IMPLEMENTED METHOD AND SYSTEM FOR MANAGING PASSENGER INFORMATION**

(71) Applicant: The Boeing Company, Chicago, IL 60606-2016 (US)
(72) Inventor: COSTAS, Pablo, 28042 MADRID (ES); CASADO, Enrique, 28042 MADRID (ES); VILAPLANA, Miguel, 28042 MADRID (ES)
(74) Representative: Carvajal y Urquijo, Isabel

(57) **Abstract**

A computer-implemented method and a system for managing passenger information are disclosed. The method exchanges updated passenger information and comprises: establishing a communication between an electronic device (102) of a user with an airline data server (120); identifying the user as a passenger for a departing flight at an airport; retrieving flight status information (departure time and boarding gate) associated with the passenger via the airline data server (120); retrieving information of passenger location with the electronic device (102); computing a probability of the passenger missing the flight based on an estimated time for the passenger to reach the boarding gate at the airport and flight status information. By using the computed probability of missing the flight, a collaborative exchanging of information can be established for passenger and airlines.

## Description

### FIELD

The present disclosure is in the field of telecommunication involving flight passengers. In particular, the present disclosure relates to a system and a method that enable collaborative exchanging of information between passengers and an Airline Operation Center (AOC) using System Wide Information Management (SWIM) infrastructure.

### BACKGROUND

Currently, it is observed that there is no real-time exchange of information between passengers and airlines. Enabling access to up-to-date information between passengers and airlines can provide benefits to all parties.

An Air Traffic Management (ATM) system is mainly focused on obtaining maximum information from aircraft in flight to ensure safe operations while at the same time reducing costs and environmental impact. At present, passengers cannot provide airlines with data that could help their business. On one hand, this often results in ineffective assistance to passengers because airlines are unaware of issues where passengers need assistance from airlines. On the other hand, valuable information provided by passengers may serve to enhance airline performance, and, eventually, ATM operations.

Particularly, reducing turnaround-time operations is important to the smooth and effective management of airlines and airports. This process can be improved by using passengers' location information and intent. A passenger who is running late to board a flight may cause a flight delay. The turnaround time of the flight is, therefore, significantly increased and can lead to an associated knock-on effect with respect to impacting simultaneous operations at the same airport, upcoming operations at a destination airport, and subsequent flights operated with the same aircraft. The turnaround time is the time during which the aircraft must remain parked at the gate between two consecutive flights. An increase in the time it takes for an aircraft to depart from a gate between flights at an airport may result in increased airport charges and, for a variety of reasons, reduced profits for the airline.

A passenger may arrive late to the gate when a passenger is present at the airport, but may be unaware that the boarding for his flight has already begun. Thus, the passenger may not head towards the boarding area on time, which may result in the flight being delayed. Although the boarding crew may use the airport public address (PA) system to announce boarding and final calls for boarding a flight, the passenger may not hear or may not respond to these announcements. As a result, the passenger may miss the flight or may cause a departure delay. A similar situation occurs in case of connecting flights. Thus, it seems that existing boarding systems do not provide sufficient communication between passengers and airlines to improve the boarding process, reduce delays and/or decrease the likelihood of missing flights.

Conversely, when an airline expects deviations from a schedule (e.g., when a flight is being cancelled or delayed) proper assistance of passengers should be offered. Nowadays, passengers need to request assistance (re-routing, accommodation, alternative airport, etc.) themselves at the check-in counter or boarding gate and may have to wait a long time before receiving such assistance.

A need thus exists for updating and exchanging available data related to the flight status according to an actual passenger location through a collaborative communication channel. By doing so, enhanced assistance may be provided to passengers to help them in case of delays, missed connections, missed flights and the like, while ATM may increase efficiency of its airport operations.

### SUMMARY

According to the identified shortcomings, it would be desirable to develop techniques that address at least some of the issues discussed above. In particular, increasing communication between passengers and airlines would result in improvements to passenger assistance and would enhance ATM operations.

It would be desirable to provide passengers with an estimate as to whether they will reach their boarding gate on time via their electronic devices based on their location and up-to-date reliable information regarding the departure time of their flights.

It would be desirable to use information obtained from passengers' electronic devices to increase the efficiency of airline and ATM operations.

It would be desirable to prevent interactions by untrusted sources when accessing ATM-related information.

To achieve one or more of these goals, the present disclosure makes use of AOC access to SWIM. SWIM includes standards, infrastructure and governance enabling the management and exchange of ATM related information.

ATM related information can be accessible by stakeholders via SWIM (especially in the future Trajectory Based Operations [TBO] environment), for instance: aircraft, airports, air traffic controllers (ATCo) and air navigation service providers (ANSP), airline operation centers, military operation centers, flow management centers and weather service providers. However, use of passenger data from passengers is presently left out (i.e., passengers are not considered as active actors).

In sum, several advantages can be obtained from the present disclosure. Customized and updated information about flights and connections status may be provided to passengers via notifications to their electronic devices. Efficiency may be also improved by estimating the likelihood that a passenger will miss a flight or connection. This may also help in reducing delays, which is an important concern for airlines. To that end, a collaborative communication channel can be established to share information among electronic devices of passengers, AOC and SWIM infrastructure.

The features and functions can be achieved independently in various embodiments of the present disclosure or may be combined in yet other embodiments in which further details can be seen with reference to the following description and drawings.

### BRIEF DESCRIPTION OF THE DRAWINGS

A series of drawings which aid in better understanding the disclosure and which are presented as non-limiting examples and are very briefly described below.
FIG. 1 schematically shows a block diagram of a collaborative architecture according to an illustrative embodiment.
FIG. 2 describes a situation of application of the present disclosure according to an illustrative embodiment.
FIG. 3 schematically shows a flowchart of a process according to an illustrative embodiment.
FIG. 4 schematically shows a message flow diagram between the system and the electronic device according to an illustrative embodiment.

### DETAILED DESCRIPTION

The proposed techniques disclosed herein may enable downlink and uplink of tailored information from and to passengers' electronic devices as illustrated by the following embodiments.

Prior to offering information to a user, the user must be correctly identified as a passenger. Since airlines ordinarily issue flight tickets that relate passenger data and a corresponding itinerary, this document may serve to identify a passenger. The flight ticket normally includes several fields: issuing airline, flight and date that the ticket is valid for, booking reference, E-ticket number, passenger name, etc. It may suffice with some of these data fields to identify a person as a valid passenger and to provide accessibility to additional sources of updated information. In any event, access should be limited for security reasons and is provided through gateways and interfaces. Direct access to SWIM is only permitted for stakeholders.

The event that determines the passenger intent to board is the check-in. Check-in status is also of high value to assess the likelihood of a missing a flight. This information, in conjunction with that included in the flight ticket, can be exploited by airlines to provide accurate measures of this likelihood.

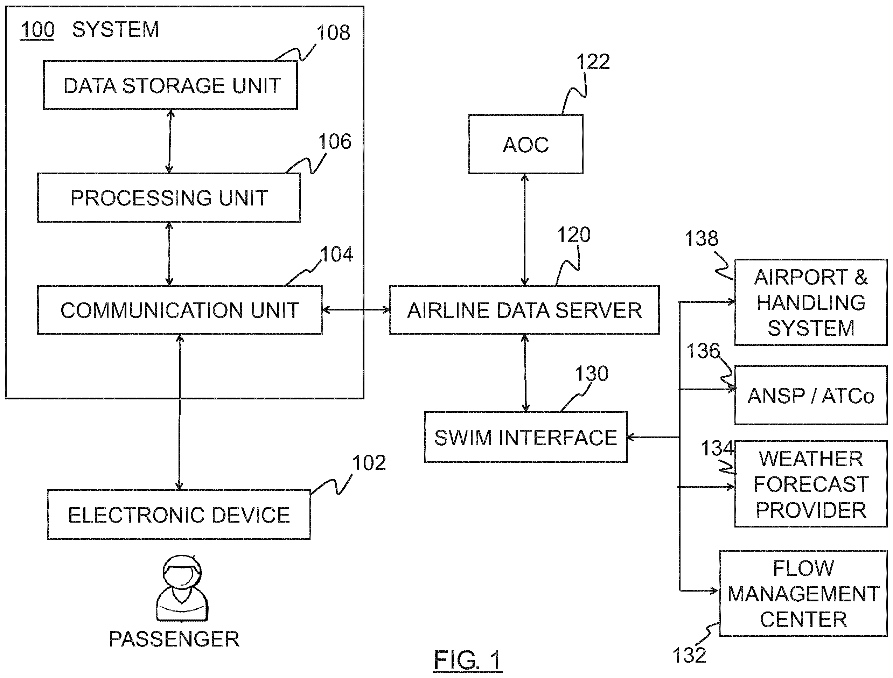

**FIG. 1** shows an example of architecture where blocks represent different devices or parts in which a system (block **100**) is used to set up a collaborative channel between passengers and the airline to access flight related information in accordance with an aspect of the present disclosure.

A passenger using his electronic device **102** may communicate with the system **100**. The passenger electronic device **102** may be a desktop computer, laptop computer, tablet, wearable device, cell phone, or other network enabled device. Geolocation is usually available in the electronic device **102**. The electronic device **102** may also have a software application installed therein to implement operations needed to enable communication with the system **100** in order to receive and display updated information related to a passenger's itinerary, but also to make available relevant information to SWIM stakeholders. To that purpose, the electronic device **102** connects to a communication unit **104** of the system **100**. The processing unit **106** of the system **100** then checks the identity of the passenger prior to establishing communication with other external entities to gather information. The system **100** also requests passenger location. Upon a valid identification, the system **100** retrieves relevant information including flight status from several sources. A customized notification can be generated by the system **100** according to passenger current situation and updated status of the flight. In this manner, the communication unit **104** of the system **100** connects to an airline data server **120** and obtains updated information regarding the itinerary of the passenger to be collected in data storage unit **108**. The itinerary may include the passenger name or other identifying information, the time and location of updated key events including aircraft boarding, departure, landing, and de-boarding, as well as itinerary changes requested by the passenger and those caused by airline and air-traffic events (e.g., delays, diversions, and cancelations).

The airline data server **120** operates as a gateway to enable secure access for the system **100** to data available via AOC **122** and SWIM interface **130**. SWIM interface **130** receives information from numerous ATM stakeholders, including one or more of ANSP/ATCo **136**, flow management center **132**, weather forecast provider **134**, airport and handling system **138...,** etc. To ensure a safe exchange of information, the system **100** and the airline data server **120** may implement additional security measures (e.g., SSH Keys, firewalls, VPNs, SSL/TLS encryption, etc.). Thus, relevant information can be offered to passengers via the system **100** including: planned schedule, real-time itinerary modifications, estimated delays, updated flight/connection status, fleet status and even data generated by the aircraft on which the passenger that is scheduled to fly. On the other hand, a passenger with his electronic device **102** may provide additional information to the system **100** for AOC **122** or SWIM interface **130**. This scheme assures a proper security protection.

In a first aspect, the system **100** generates a customized notification to be sent to the electronic device **102**. The notification may include likelihood of missing a flight/connection in view of updated flight information (e.g., updated flight delay information) and current passenger location. To do so, the system **100** implements an algorithm to combine information coming from passengers, AOC **122** and SWIM interface **130**. Several calculations are performed to predict and estimate flight delays according to an average delay of a selected airport (available through SWIM interface **130**), status of a current flight (available through AOC **122**), status of remaining flights of the same airline (available through AOC **122**), and other passengers' locations (available through passengers' electronic devices **102**). The system **100** may also have access to historical data via storage **108** to improve accuracy using the previous estimations of flight delays, missed flights and passenger connections.

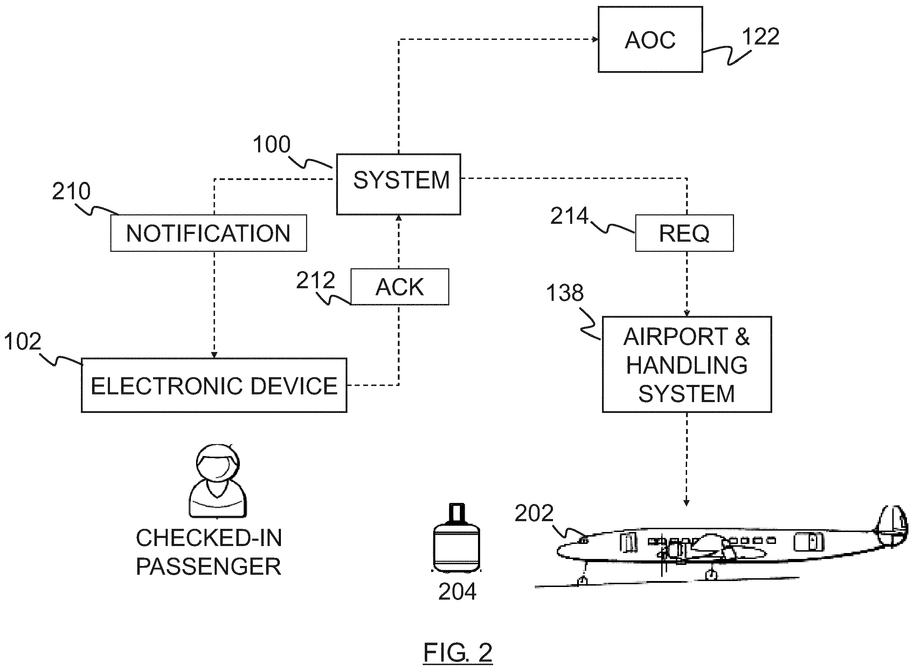

Up to this point, the system **100** has the capability of offering information to passenger. Conversely, in a second aspect, the system **100** also provides for the capability of making passengers' information available to SWIM and AOC **122**. This other feature aids in coordinating airport services and in reducing turnaround times, which may improve overall performance of airlines and/or airports. **FIG. 2** depicts an example of situation where a collaborative exchanging of information benefits all parties in accordance with an aspect of the present disclosure. A passenger, after checking-in, receives in his electronic device **102** a notification **210** from system **100** indicating he most likely will miss his flight according to his current location and the estimated departure time for the flight. The passenger, in response to the notification **210**, confirms via ACK **212** message through his electronic device **102** that he will be unable to board. By doing so, he may avoid losing his baggage **204**. A recovery of baggage **204** may be successful using system **100**, which may communicate with the Airport and Handling System **138** via a message requesting baggage recovery, REQ **214**. The Airport and Handling System **138** then checks if the baggage **204** has already been loaded onto the aircraft **202** and may instruct that the baggage be removed from the aircraft **202**. The system **100** also communicates with the AOC **122**, to inform the boarding gate operator that the boarding gate may be closed without waiting for that passenger and, thus, without delaying the departure of the aircraft **202** due to such passenger. This situation is a mere example that shows how the system **100** contributes to enhance passenger assistance and reduces turnaround time, while controlling security and integrity.

In general, according to the present teachings numerous functionalities and benefits may be offered to all parties including airlines, ATM, airports and passengers. For instance, airlines can establish an improved relationship with customers since, for example, passengers may not need to report to a customer service counter when missing a flight or connection. Connections and flight departures may be improved based on passengers' status (e.g., boarding can be closed when some passengers acknowledge that they are going to miss the flight/connection). In addition, fleet management may be improved due to the ability of re-organizing connections and flight departures using the combination of boarding/in-transit passengers' data, average airport delay and own fleet status.

Regarding ATM, departure delays can be reduced due to more accurate estimates of passengers' time to reach the gate. Thus, fewer time and trajectory deviations with respect to the planned operations can be achieved. Coordination of airport services is enhanced and the turnaround time is reduced.

As to airports, several advantages can be obtained. Resources may be managed more efficiently due to greater adherence to flight schedules (by meeting or exceeding expected turnaround times), reduced modifications to airport gate allocations, or improved airport slots management.

Lastly, passengers may obtain real-time knowledge about flight status or connection status, which allows them the capability of making immediate decisions with respect to schedule adjustments. In practice, customer experience is improved due to the involvement of the passenger in updating or modifying his itinerary and enhancing the ability to accommodate passenger preferences in case of a missed flight/connection. Another advantage is the capability of informing the airline in case of loss of certain flight or connection. This may result in offering an alternative solution that fits passenger's needs. It may be advisable to require an acknowledgment from the passenger to proceed with the alternative solution.

Now, referring back to FIG. 1, SWIM interface **130** has access to surveillance information and flight plan information (initial and updated flight plan, controller clearances and context information) available through ANSP/ATCo **136**. Such information helps determine the actual flight status, which is the basis of computing the likelihood of missing flights/connections. SWIM infrastructure may connect to a Weather Forecast Provider **134** that provides useful weather information (real time and forecasts) for wind, temperature, pressure or lighting strikes. Also additional weather datasets can be obtained such as Meteorological Aerodrome Reports (METAR), Terminal Area Forecasts (TAF) or Significant Meteorological Advisories (SIGMET). It is crucial, especially in the vicinity of an airport, to have accurate estimations of average delays. In addition, historical average delays and weather events can be correlated to generate more reliable delays predictions. Actual and planned traffic flows, real-time and forecasted congestion information can be obtained from a Flow Management Center **132** and may be required to evaluate network effects and to reliably estimate average delays. Lastly, airport and handling systems **138** implementing A-CDM (Airport Collaborative Decision Making) may provide information about taxi time, departure/arrival sequencing, target off-block time and start-up approval time.

In view of the diverse sources of information, it is an aspect of the present disclosure to provide a system **100** that may continuously receive, process and store SWIM information coming from all stakeholders, not only the flights corresponding to the airline that deploys the service. This also helps to adjust calculations and refine predictions of a passenger missing a flight. Below, a brief description of several operations performed by some of the elements of FIG. 1 is presented.

The communication unit **104** of the system **100** may collect information from SWIM infrastructure related to inbound/outbound traffic from a specific airport, handling services, estimated time of arrival (ETA) from a considered flight, status of the actual traffic, weather information, congestion information (e.g., average delay, likelihood of holding, etc.). This information is combined with information from AOC **122** and an estimate of the passenger missing the flight is computed. The system **100** also shares the main indicators that characterize the actual operations. The processing unit **106** of the system **100** communicates with its data storage unit **108** and searches for historical data to apply data mining operations to obtain the most probable average delay according to the series of flights recorded over a long period of time. By doing so, the processing unit **106** may correct or adjust an estimated delay previously computed. Then, the estimated delay for the flight is correlated with the passenger itinerary. If there is no delay, no alert is included in the notification **210** sent to the passenger electronic device **102**. If there is a delay, but the itinerary is not affected (e.g., no risk of missing a connection), a warning is included in the notification **210**. If the estimated delay impacts the current itinerary according to the actual passenger location, different alternatives may be offered to be included in the notification **210** sent to the passenger electronic device **102**. Such alternatives shared with passengers should be issued in coordination with the AOC **122** which manages both passenger information (flight ticket) and fleet status. In this manner, the electronic device **102** enables the passenger to select among the different alternatives and to communicate a selection in advance to re-arrange the itinerary.

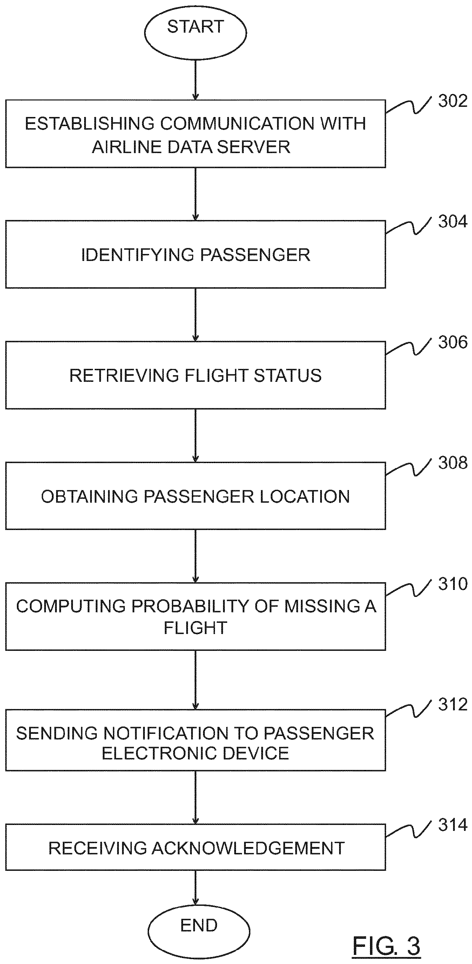

**FIG. 3** is an illustration of a flowchart of a process for managing passenger information in accordance with further aspects of the present disclosure. The process illustrated in FIG. 3 may be implemented in a computer network architecture like the one depicted in FIG. 1. The different operations shown in this flowchart may be performed in software loaded onto and run on one or more data processing systems. In particular, software code of an application may be installed on a passenger electronic device **102** to enable, when running, a communication with system **100**.

The process begins by establishing a communication between a user's electronic device **102** and an airline data server **120** (operation **302**).

After the communication is established, the next step is identifying whether the user is a valid passenger for a departing flight (operation **304**). Otherwise, the airline data server **120** does not grant access to the electronic device **102**.

When the user is a valid passenger, flight status information associated with the passenger is retrieved via the airline data server **120** (operation **304**). The flight status information includes at least departure time and boarding gate. This flight status information can be obtained via AOC **122** and SWIM infrastructure as already depicted in FIG. 1.

Then, according to the method, information of passenger location is obtained from the electronic device **102** (operation **308**). The passenger may provide his approximate location manually as an input. Alternatively, his electronic device **102** may automatically provide the location via GPS or triangulation of signal strength among other suitable techniques.

In addition to the location, the passenger may provide additional information related to the way of transportation (e.g., outside the airport: by taxi, bus, underground, train; at the airport: on foot, by golf cart, etc.). This may serve to better adjust estimate time to reach the gate.

An estimated time to get to the boarding gate at the airport can be considered. A probability of the passenger missing the departing flight may be then computed. The probability is calculated using at least the passenger location, flight status information and the estimate time for the passenger to reach the boarding gate at the airport (operation **310**).

A notification **210** is sent to the electronic device **102** of the passenger based on the computed probability (operation **310**). The notification **210** may also contain specific information about the current status of the departing flight and a request for the passenger to confirm whether he is unable to board the flight with his electronic device **102** via an acknowledgment (ACK) **212** message.

Particularly, the notification may be of different types: a boarding message, a delay message, a remaining time before boarding starts, a remaining time before boarding ends, a suggested route to the gate, a final call for boarding, or a missed flight alert, etc.

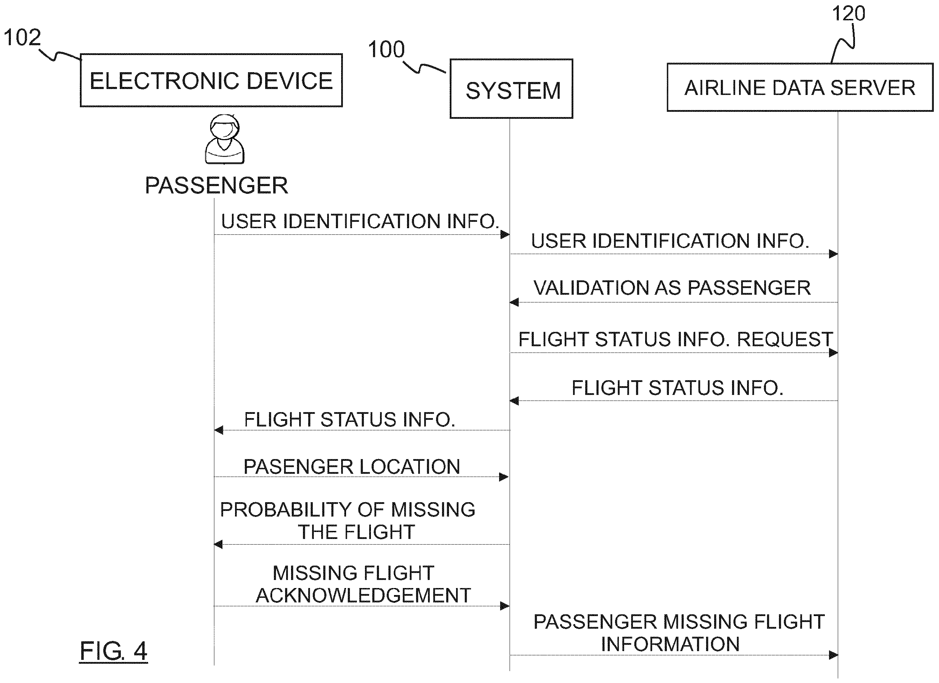

**FIG. 4** shows an example of message flow diagram according to another aspect of the method for managing passenger information. A user wishes to obtain information of a departing flight via his electronic device **102**. Firstly, the user needs to be correctly identified by the system **100**. To do so, user identification information is sent by the electronic device **102** to the system **100**. Then, the system **100** checks the user identification information by consulting the airline data server **120**. If the user is a passenger of an upcoming departing flight (e.g., a flight departing within the next 24 hours or less), the user identification information is determined to be legitimate and the user is considered to be a valid passenger.

Next, the system **100** requests flight status information from the airline data server **120**, which is provided from the airline data server **120** to the system **100**, and then ultimately sent to the electronic device **102**. Upon receiving flight status, the electronic device **102** sends location information (based on the position of the electronic device **102**) to the system **100**. The system **100** is able to estimate the time needed for the passenger to reach the designated boarding gate at the airport based on the location of the electronic device **102**. Thus, the system **100**, taking into account at least the departure time for the flight, is able to compute a probability of the passenger missing (or making) the flight, which is sent by the system **100** to the electronic device **102** After receiving the probability at the electronic device **102**, the passenger may respond by notifying (acknowledging) the system **100** that he will miss the flight. In exchange, system **100** may offer him proper assistance (e.g., hotel accommodation, rebooking on the next available flight, etc.). Furthermore, the system **100** can inform the airline data server **120** that the passenger will not show up in time (passenger missing flight information). The airline may benefit from an early notification of passengers missing flight and may close the boarding gate without delay. Thus, airlines and ATM can take advantage of reduced turnaround times. In sum, the management of handling resources at the airport can be made more efficient.

It is another aspect of the present disclosure to provide a computer program product (e.g., a computer-readable medium) that includes instructions in code for managing passenger information. These instructions, when loaded into a memory and executed by a processor, cause several steps to be performed. In particular, communication between an electronic device **102** of a user and an airline data server **120** is established. Next, the user is identified as a passenger of a departing flight by consulting AOC **122**. Subsequently, updated flight status information is retrieved from the airline data server **120**, including the departure time and the boarding gate assigned to the flight. Then, passenger location information is retrieved via the electronic device **102** of the passenger. Next, a probability of the passenger missing the flight is computed based on an estimated time for the passenger to reach the gate (using the location information) and the departure time of flight. The computed probability is displayed on the electronic device **102**. In view of the computed probability, a notification is sent to the system **100** and then relayed to the airline data server **120**.

As apparent from the present disclosure, establishing a bidirectional information flow provides an unprecedented capability, which enables many new features to SWIM stakeholders. Similarly, passengers can benefit from obtaining updated and reliable flight information without adversely impacting confidentiality, integrity or availability of resources of SWIM. Additional customized services can be offered to passengers by airlines using this scheme. These and other features, functions, and advantages that have been discussed can be achieved independently in various embodiments or may be combined in yet other embodiments.

## Claims

1. A computer-implemented method for managing passenger information comprising the steps of:
- establishing a communication between an electronic device (102) of a user with an airline data server (120);
- identifying the user as a passenger for a departing flight at an airport;
- retrieving flight status information associated with the passenger with the airline data server (120), said flight status information comprising departure time and boarding gate;
- retrieving information about passenger location with the electronic device (102); and,
- computing a probability of the passenger missing the flight based on an estimated time for the passenger to reach the boarding gate at the airport and the flight status information and producing a notification according to the computed probability.

2. The method of claim 1, wherein flight status information is obtained through System Wide Information Management (SWIM) and/or through an Airline Operation Center (AOC).

3. The method of claim 1 or 2, wherein the notification further comprises flight status information selected from at least one of: gate information, terminal information, a flight status, a delay, a cancellation, and a connecting flight status.

4. The method of any of claims 1 to 3, wherein retrieving information about passenger location includes at least one of the following: current location, moving direction, speed and method of transportation.

5. The method of claim 4, wherein information of passenger location is retrieved by one of the following: transmitting global positioning information with the electronic device (102), triangulation signals, and entry of a location by passenger.

6. The method of any of claims 1 to 5, wherein the notification comprises information regarding a suggested route to the boarding gate.

7. The method of any of claims 1 to 6 further comprising:
- requesting the passenger to confirm whether the passenger is unable to board the departing flight;
- retrieving itinerary associated with the passenger upon confirming he is unable to board the departing flight;
- producing a proposal comprising an available alternative flight; and
- sending the proposal to the electronic device (102).

8. The method of claim 7, further comprising:
- sending a missed flight notification (214) to airline operation center (122) to permit closing the gate without waiting for the passenger to arrive.

9. The method of claim 7 or 8, further comprising:
- retrieving checked-in status information of the passenger; and
- sending a missed flight notification (214) to airport and handling system (138) for managing baggage (204) of the checked-in passenger upon receiving a confirmation (212) indicating the passenger is unable to board the departing flight.

10. The method of any of claims 1 to 9 further comprising:
- storing historical average delays of the airport and weather events in a data storage unit (108);
- correlating historical delays of the airport and weather events with retrieved flight status information to adjust the probability of the passenger missing the departing flight.

11. A system (100) for managing passenger information comprising:
- a communication unit (104) configured to establish a communication between an electronic device (102) of a user and an airline data server (120) and to identify the user as a passenger for a departing flight at an airport; the communication unit (104) further configured to request the airline data server (120) to retrieve flight status information associated with the passenger, said flight status information comprising departure time and boarding gate; the communication unit (104) further configured to request the electronic device (102) to retrieve information of passenger location; and,
- a processing unit (106) configured to compute a probability of the passenger missing the departing flight based on the passenger location, flight status information and an estimated time for the passenger to reach the boarding gate at the airport; the processing unit (106) further configured to produce a notification according to the computed probability and to instruct the communication unit (104) to send the notification to the electronic device (102).

12. The system (100) of claim 11, wherein the communication unit (104) requests the airline data server (120) to retrieve flight status information associated with the passenger from System Wide Information Management (SWIM) and/or from an Airline Operation Center (AOC).

13. The system (100) of claim 11 or 12, comprising a data storage unit (108) configured to store historical delays of the airport and weather events to be correlated by the processing unit (106) to infer a delay prediction on the retrieved departure time and to make an adjustment on the computed probability of the passenger missing the departing flight.

14. The system (100) of claim 13, wherein the communication unit (104) is configured to retrieve itinerary associated with a passenger being unable to board the departing flight; and to send a proposal to the electronic device (102) wherein the proposal comprises an available alternative flight.

15. A computer program product for managing passenger information, comprising computer code instructions that, when executed by a processor, causes the processor to perform the method of any of claims 1 to 9.
